# FASCICULE DE BREVET EUROPEEN

(11) **EP 3 103 325 B1**
(45) Date de publication et mention de la délivrance du brevet: **07.03.2018**
(21) Numéro de dépôt: 16305680.7
(22) Date de dépôt: 09.06.2016
(51) Int. Cl.: A01F 29/12, A01K 5/00, A01K 29/00, A01F 29/00

(54) **DISPOSITIF DE PROJECTION À DISTANCE DE PRODUITS ET MACHINE AGRICOLE AVEC UN TEL DISPOSITIF**
VORRICHTUNG ZUM WEITSPRITZEN VON PRODUKTEN, UND LANDWIRTSCHAFTLICHE MASCHINE MIT EINER SOLCHEN VORRICHTUNG
DEVICE FOR REMOTE SPRAYING OF PRODUCTS AND AGRICULTURAL MACHINE WITH SUCH A DEVICE

(30) Priorité: 10.06.2015 FR 1555292
(43) Date de publication de la demande: 14.12.2016
(73) Titulaire: Kuhn-Audureau SA, 85260 La Copechagnière (FR)
(72) Inventeur: GARNIER, Charly, 85660 Saint-Philbert-de-Bouaine (FR); ROGER, Christophe, 85000 La Roche-sur-Yon (FR)
(74) Mandataire: Nuss, Laurent

(56) Documents cités:
- EP-A2- 1 149 527
- DE-A1- 3 727 156
- FR-A1- 2 993 138
- GB-A- 2 079 574

## Description

La présente invention concerne le domaine des équipements agricoles, plus particulièrement les machines agricoles, plus particulièrement les machines agricoles réalisant ou intégrant une fonction de projection à distance de produits et a pour objet un dispositif de projection amélioré et une machine agricole équipée d'un tel dispositif.

Les dispositifs visés dans le cadre de la présente invention sont essentiellement du type dispositif de projection de produits en vrac ou fragmentaires, en particulier produits pour l'alimentation animale ou la formation de litière pour animaux. De tels dispositifs comprennent généralement un carter dans lequel est monté un organe rotatif de projection et comportant une ouverture latérale d'éjection se prolongeant par un conduit ou une goulotte, ledit organe rotatif présentant des pales radiales destinées à entraîner les produits pour les projeter à travers l'ouverture dans la goulotte, en formant un jet de matière essentiellement dirigé selon l'axe médian de la portion de goulotte adjacente à l'ouverture, et avec avantageusement génération simultanément d'un flux d'air de transport, correspondant au flux d'air généré par cet organe rotatif et envoyé dans la goulotte. L'ouverture d'éjection est ménagée dans la paroi périphérique du carter le long de la face interne de laquelle défilent les extrémités extérieures des pales radiales et comporte un bord ou une arête de délimitation disposé(e) du côté de l'ouverture vu en dernier par les extrémités périphériques extérieures des pales lors de leur rotation durant un fonctionnement opérationnel du dispositif, formant généralement le bord ou l'arête inférieur(e) de ladite ouverture.

De tels dispositifs sont présents sur des machines d'alimentation du bétail ou des machines de paillage, autonomes, tractées ou portées, mais également sur des machines de distribution ou de déplacement de produits.

Une application particulière de ce type de dispositif concerne la distribution de produits, tels que du foin ou de l'ensilage, aux animaux ou bien pour la projection de paille sur leurs litières.

Des machines remplissant ces fonctions sont notamment commercialisées par la demanderesse dans le cadre de sa gamme PRIMOR.

Ces machines comportent généralement un caisson dans lequel les produits à projeter sont chargés (souvent sous forme partiellement agglomérée ou compactée, tels que des balles, des bottes, des blocs ou analogues), pour être acheminés, par exemple par un tambour démêleur, dans le carter renfermant l'organe rotatif de projection (ou turbine).

Ces produits arrivent ainsi sur les pales radiales de distribution de la turbine en rotation, sont entraînés par celles-ci dans leur mouvement en rotation et sont éjectés hors du carter par l'ouverture latérale périphérique sous l'effet de la force centrifuge (et donc du mouvement imprimé par cette dernière) et du flux d'air généré par la rotation des pales et canalisé à travers l'ouverture et la goulotte attenante. Le document EP 1 149 527 décrit à titre d'exemple une telle machine.

Typiquement, l'organe rotatif de projection (turbine) peut présenter une vitesse de rotation de l'ordre de 620 tr/mn lorsque la machine est utilisée pour réaliser une opération de paillage, la paille étant projetée à une distance comprise entre 5 et 18m. Par contre, la turbine présente une vitesse de rotation de seulement 310 tr/mn lorsque la machine est utilisée pour réaliser une opération de distribution où les produits chargés dans le caisson doivent être déposés au pied de la machine (exemples de produits les plus couramment traités : foin, ensilage de maïs, ensilage d'herbe, herbe enrubannée).

Sur certaines machines utilisées pour réaliser les opérations de paillage et de distribution, il existe une fonction supplémentaire qui est le hachage. Ainsi le produit sous forme de végétaux à brins longs peut être haché et donc raccourci avant d'être éjecté.

Habituellement, la paille est un produit sec puisqu'elle est stockée sous un hangar ou analogue. La paille introduite dans le caisson arrive sur les pales radiales de distribution de la turbine et est hachée par les couteaux et les contre-couteaux disposés sur le pourtour. Lorsque les brins de paille sont suffisamment courts et légers, ils sont éjectés par le flux d'air principal créé par la turbine. Les brins insuffisamment hachés sont recyclés, c'est-à-dire qu'ils retombent entre les couteaux et la tôle de recyclage pour passer à nouveau dans le carter.

Aujourd'hui une telle pailleuse hacheuse distributrice (telle que décrite par exemple dans FR2993138) fonctionne bien avec des produits secs. Par contre, on rencontre des problèmes lorsque le produit à distribuer est humide, en particulier parce que la position du contre-couteau réglable, au niveau de l'orifice de sortie latéral, freine et/ou dévie le produit.

En effet, le produit plus lourd a tendance à se retrouver trop bas par rapport au flux principal et il n'a pas assez de vitesse pour être éjecté : il s'accumule donc au niveau de la zone de recyclage.

Par ailleurs, le produit éjecté, mais qui n'est pas transporté dans le flux principal, n'est pas projeté suffisamment loin (parfois à une distance inférieure à 5mètres) et peut par exemple se retrouver au niveau du couloir d'alimentation.

Ce problème est également rencontré, à une échelle moindre, sur les machines utilisées pour le paillage et la distribution sans être équipées de la fonction hachage.

Dans le cas d'une machine munie de la fonction hachage, l'accumulation de produit humide au niveau de la zone de recyclage peut aller jusqu'à provoquer des bourrages.

Les végétaux à brins longs humides sont par exemple issus d'une balle de fourrage qui est enroulée dans une enveloppe étanche formée de rubans entrecroisés de matière plastique. Ce fourrage contient environ 45-50% de matière sèche. La distribution de produit provenant d'une balle d'enrubannage se fait par paquets parce que les brins longs sont entremêlés. Pour faciliter le passage des paquets, la section transversale de l'orifice de sortie peut être rendue plus importante. Mais malgré cette section transversale plus importante, le risque de bourrage lié à l'accumulation du produit sur le bord ou l'arête inférieur(e) de l'ouverture d'éjection (portion repliée de l'extrémité supérieure 54 de la tôle de recyclage 52 du document FR 2 993 138) demeure.

Dans la région de ce bord inférieur et partiellement dans la partie inférieure (un cinquième à un tiers de sa hauteur) du passage attenant formé par la portion de goulotte adjacente à l'ouverture, les inventeurs ont identifié une zone neutre, à faible flux ou à flux turbulent, qui n'est pas traversée par le flux d'air principal. En effet, il a pu être constaté que le flux principal se concentre dans la partie supérieure de l'orifice d'éjection et du passage intérieur de la goulotte.

Dans cette zone neutre, la vitesse de la soufflerie est trop faible pour éjecter les brins humides qui sont plus lourds, et ils tombent donc par gravité et s'accumulent sur ledit bord et l'entrée de la goulotte. Ce problème est accentué en présence d'un contre-couteau en partie haute près de l'ouverture, et notamment lorsque ce contre-couteau est sorti totalement pour obtenir un hachage important.

Ce problème est également présent lorsqu'on souhaite projeter de la paille humide, stockée à l'extérieur, sur les litières. Les brins les plus lourds se retrouvent et s'accumulent dans la zone neutre, c'est-à-dire au niveau du bord inférieur et de l'entrée de la goulotte. L'humidité accentue encore le phénomène d'adhérence des brins les uns avec les autres.

Par les documents EP 1 149 527 et EP 0 098 769, on connaît par ailleurs des machines agricoles pour la distribution de produits dans lesquelles une turbine assurant une fonction de projection et une fonction de hachage est montée dans la goulotte d'éjection. Le passage dans la goulotte est par conséquent presque totalement obstrué par la turbine et la quantité de produits pouvant être projetée, ainsi que la distance de projection, sont de ce fait fortement limitées.

La présente invention a pour but de réduire notablement les risques d'accumulation de produits dans les dispositifs de projection du type évoqué en introduction, et donc de bourrage des machines qui en sont équipées, mais également d'élargir la palette des types de produits susceptibles d'être traités par ces dispositifs.

A cet effet, l'invention a pour objet un dispositif de projection du type évoqué en introduction, caractérisé en ce qu'au moins un organe actif et mobile, apte et destiné à diriger les produits qui entrent en contact avec lui à travers l'ouverture, dans la goulotte et sensiblement dans le jet de matière éjectée, est disposé dans la région dudit bord ou de ladite arête.

L'invention concerne également une machine agricole équipée d'un tel dispositif de projection amélioré.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
les figures 1 et 2 sont des vues en perspective, selon deux directions différentes, d'un dispositif de projection amélioré selon l'invention, la partie du carter comprenant l'ouverture d'alimentation en produits ayant été enlevée,
la figure 3 est une vue en élévation frontale, selon une direction parallèle de l'axe de rotation de l'organe rotatif d'éjection, du dispositif de projection des figures 1 et 2,
la figure 4 est une vue similaire à celle de la figure 3 illustrant le dispositif en fonctionnement avec les différents flux de produits,
les figures 5A à 5C sont des vues en perspectives de différentes variantes alternatives de réalisation de l'organe actif et mobile sous forme de rotor déflecteur faisant partie du dispositif représenté figures 1 à 4, et,
la figure 6 est une représentation en perspective d'une pailleuse hacheuse distributrice comportant un dispositif de projection selon l'invention.

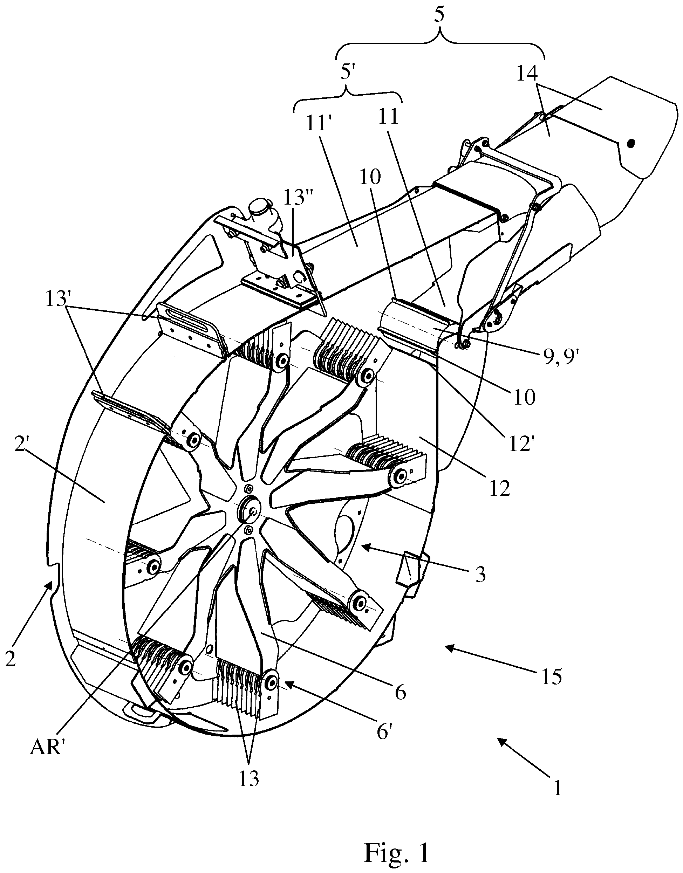

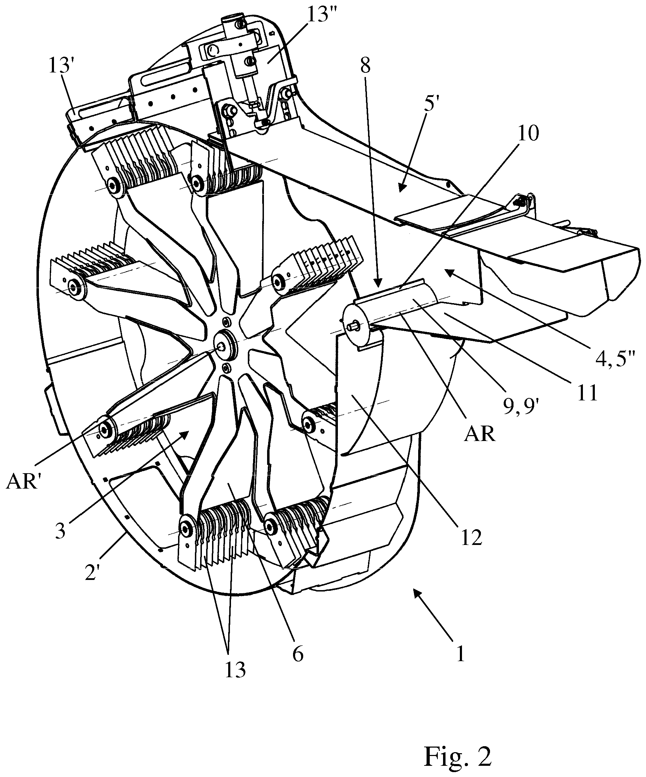

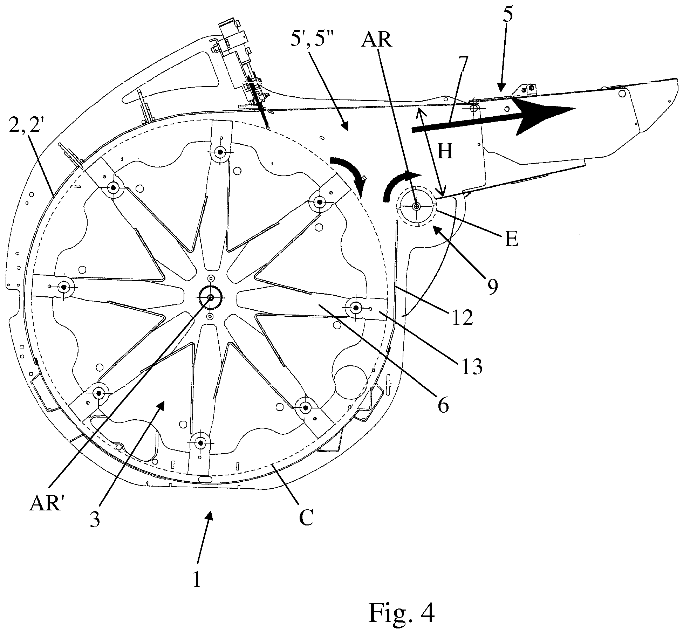

Les figures 1 à 4 des dessins annexées illustrent un dispositif 1 de projection de produits en vrac ou fragmentaires, en particulier produits pour l'alimentation animale ou la formation de litière pour animaux. Ce dispositif comprend un carter 2 dans lequel est monté un organe rotatif de projection 3. Ce carter 2 comporte une ouverture latérale d'éjection 4 se prolongeant par un conduit ou une goulotte 5. L'organe rotatif 3 présente des pales radiales 6 destinées à entraîner les produits pour les projeter à travers l'ouverture dans la goulotte, en formant un jet de matière essentiellement dirigé selon l'axe médian AM de la portion de goulotte 5' adjacente à l'ouverture 4, et avec avantageusement génération simultanément d'un flux d'air de transport (flux d'air généré par l'organe 3 et circulant dans la goulotte 5 vers l'extérieur). L'ouverture d'éjection 4 est ménagée dans la paroi périphérique 2' du carter 2 le long de la face interne de laquelle défilent les extrémités extérieures 6' des pales radiales 6 et elle comporte un bord ou une arête 8 de délimitation disposé(e) du côté de l'ouverture vu en dernier par les extrémités périphériques extérieures 6' des pales 6 lors de leur rotation durant un fonctionnement opérationnel du dispositif 1, formant généralement le bord ou l'arête de délimitation inférieure de ladite ouverture.

Conformément à l'invention, au moins un organe 9 actif et mobile, apte et destiné à diriger les produits qui entrent en contact avec lui à travers l'ouverture 4, dans la goulotte 5 et sensiblement dans le jet 7 de matière éjectée, est disposé dans la région dudit bord ou de ladite arête 8.

Ainsi, l'organe 9 par son positionnement et sa nature (actif et mobile) empêche l'accumulation de produits au niveau du bord et de l'arête 8.

De plus, par son action spécifique, il réalise une projection des produits qui entrent en contact avec lui, en les redirigeant vers la partie supérieure du passage 5" formé par la goulotte 5 où circule le flux d'air principal (principale composante du flux d'air de transport) et l'essentiel du jet de matière 7. L'organe 9 fournit ainsi, dans la région du bord inférieur 8 de l'entrée de la goulotte 5, une surface active de rebond ou de déflexion, imprimant aux produits qui entrent en contact avec elle une énergie cinétique additionnelle avec modification de leur direction de déplacement.

Néanmoins, aucune fonction additionnelle de découpage et/ou de hachage des produits par ledit organe 9 n'est recherchée (elle serait a priori inefficace dans cette zone), bien qu'une désagrégation supplémentaire desdits produits sous l'effet de leur impact avec l'organe mobile 9 ne puisse être exclue, ce en fonction de la nature des produits concernés notamment, ainsi que de la réalisation pratique dudit organe 9.

Néanmoins, en accord avec un mode de réalisation préféré, et comme le montrent les figures 1 à 4, l'organe 9 consiste avantageusement en un organe rotatif, préférentiellement de forme sensiblement cylindrique, avec un axe de rotation AR disposé transversalement par rapport à la direction du jet de matière 7 éjecté, préférentiellement parallèlement à l'axe de rotation AR' de l'organe rotatif de projection 3, et pourvu, sur sa face extérieure destinée à entrer en contact avec les produits, de formations saillantes ou de projections 10, en particulier de type profilé, telles que par exemple des ailettes ou des pales, s'étendant ou non parallèlement à l'axe de rotation AR dudit organe actif 9.

L'organe rotatif 9 peut être monté libre en rotation, son entraînement pouvant alors résulter du flux d'air généré par l'organe rotatif de projection 3 et canalisé dans la goulotte 5, lequel impacte au moins les formations saillantes 10.

Toutefois, en accord avec une variante de réalisation préférée, l'organe actif et mobile 9 est positivement entraîné en rotation, préférentiellement avec une vitesse linéaire périphérique inférieure ou égale à la moitié de la vitesse linéaire périphérique de l'organe rotatif de projection 3. De plus, il consiste avantageusement en un rotor avec un corps 9' à paroi cylindrique pourvue d'ailettes ou de pales saillantes 10 sur sa face extérieure, arrangées parallèlement à son axe de rotation AR.

L'organe 9 présente ainsi une structure fermée vers l'extérieur, évitant de ce fait l'introduction et la rétention de produits dans le corps 9', tout en étant pourvu de moyens 10 d'entraînement efficace desdits produits pour les relancer vers le flux principal.

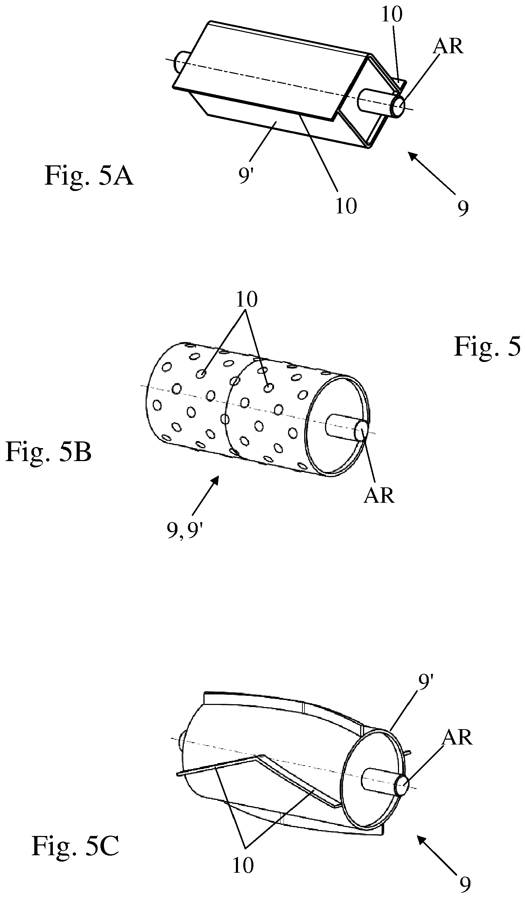

Bien que les figures 1 à 3 illustrent, selon un mode de réalisation préférentiel, un rotor déflecteur 9 avec un corps cylindrique 9' à extension axiale et à section circulaire pourvu de quatre ailettes 10 droites, d'autres variantes constructives peuvent être envisagées, telles que par exemples :
- deux tôles profilées à section en L, assemblées entre elles par soudure pour former un corps 9' à paroi cylindrique à section carré, rectangulaire ou en losange, avec deux ailes 10 proéminentes et parallèles à l'axe de rotation AR, formées par les extrémités des branches longues des profilés en L (voir figure 5A) ;
- un corps à paroi cylindrique 9' comportant sur sa face extérieure un revêtement avec un fort coefficient d'adhérence, une pluralité de picots 10 espacés ou des formations protubérantes analogues (voir figure 5B);
- un corps à paroi cylindrique 9' comportant sur sa face extérieure des ailes 10 en forme de spires ou de chevrons (par exemple en tant que plats rapportés sur ladite face extérieure) concentrant le produit éjecté contactant le rotor 9, vers le centre du flux de sortie.

Un moyen de nettoyage, par exemple du type râcle, peut le cas échéant être associé au rotor 9 pour éviter les accumulations de produit sur sa face extérieure.

L'entraînement actif dudit organe 9 peut être réalisé par l'intermédiaire d'un actionneur spécifique (moteur hydraulique, électrique ou autre) ou préférentiellement par un moyen de transmission de mouvement entraînant également l'organe rotatif de projection 3, relié à un actionneur intégré ou extérieur à la machine 16 incorporant le dispositif 1.

Pour une efficacité de fonctionnement optimisée et afin de couvrir au mieux la zone neutre, l'organe actif et mobile 9 s'étend sensiblement sur toute la largeur de l'ouverture latérale d'éjection 4 et partiellement dans le passage 5" défini par la portion de goulotte 5' adjacente à l'ouverture 4 précitée, avantageusement avec un degré de proéminence, par rapport à la paroi inférieure 11 de la portion de goulotte 5', au plus égal à un tiers de la hauteur dudit passage 5", préférentiellement avec une proéminence comprise entre un cinquième et un tiers de cette hauteur.

Cette disposition spécifique de l'organe 9 permet notamment de faciliter l'intégration des produits déviés par lui dans le flux principal d'éjection, sans obstruer de manière notable le passage dans la goulotte 5.

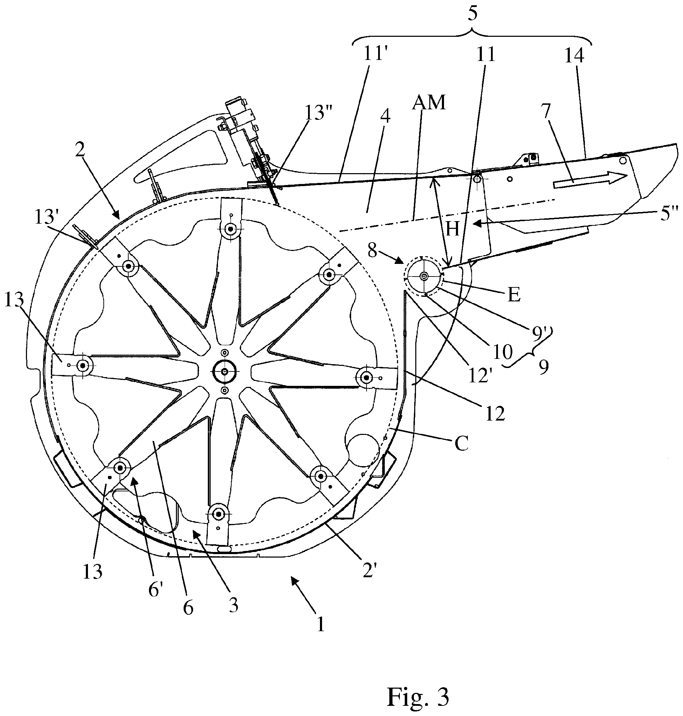

En accord avec un mode de réalisation préférée de l'invention, illustré sur les figures annexées, l'organe actif et mobile 9 de forme cylindrique constitue lui-même le bord ou l'arête inférieure 8 de l'ouverture latérale d'éjection 4, ainsi qu'au moins partiellement ladite paroi inférieure 11 de la portion de goulotte 5' adjacente à ladite ouverture d'éjection latérale 4, l'encombrement périphérique externe dudit organe 9 (illustré, sur la figure 3, par le cercle virtuel E parcouru par les arêtes extérieures des ailettes 10) étant avantageusement affleurante avec la face interne de la paroi périphérique 2' du carter 2 s'étendant radialement autour de l'organe rotatif de projection 3 et dans laquelle est ménagée l'ouverture latérale d'éjection 4.

Pour aboutir à un effet optimal de déflection active de la part de l'organe 9, en fonction notamment du type de produit éjecté, il peut être prévu que ledit organe 9 soit saillant dans le passage 5" défini par la portion de goulotte 5' adjacente à l'ouverture latérale d'éjection 4, préférentiellement par le bas, en étant monté réglable en hauteur par rapport à la paroi inférieure 11 correspondante de la goulotte 5, préférentiellement de section carrée ou rectangulaire, avantageusement par positionnement réglable avec ablocage libérable de l'axe de rotation AR de l'organe 9 formant rotor.

On aboutit ainsi à une ségrégation optimale entre les produits destinés à être éjectés et ceux destinés à demeurer dans le carter 2 plus longtemps.

Pour les types de machines et de produits visés dans la présente demande, les inventeurs ont pu constater par le biais d'essais qu'une vitesse linéaire minimale d'environ 7 m/s de l'organe 9 (au niveau du cercle virtuel E) permettait un fonctionnement optimisé de l'invention.

Selon une variante de réalisation pratique, il peut être prévu que la paroi supérieure 11' de la portion de goulotte 5' adjacente à l'ouverture latérale d'éjection 4 s'étende, vue selon une direction parallèle à l'axe de rotation AR' de l'organe rotatif d'éjection 3, continûment depuis la paroi périphérique 2' du carter 2 arrangé radialement autour dudit organe rotatif de projection 3, selon une direction sensiblement tangentielle au cercle périphérique extérieur C balayé par les extrémités des pales radiales 6 au cours de leur rotation. En outre, ladite paroi périphérique 2' se termine avantageusement par une tôle de recyclage 12 dont la portion d'extrémité libre 12' se prolonge jusqu'au bord inférieur 8 de l'ouverture latérale d'éjection 4 recevant ou formé par l'organe actif et mobile 9, en s'écartant dudit cercle périphérique extérieur balayé par lesdites extrémités 6' des pales radiales 6.

La portion libre 12' peut éventuellement être pourvue de la râcle mentionnée précédemment. Un tel organe de nettoyage peut, le cas échéant, aussi être prévu au niveau du bord de la paroi 11 adjacente à l'organe actif 9.

Lorsqu'en plus de la fonction de projection, l'organe rotatif 3 doit également remplir une fonction de réduction dimensionnelle des produits, il peut être prévu que les extrémités 6' des pales radiales 6 comportent des couteaux 13, montés à pivotement sur lesdites pales 6, avantageusement sur toute la largeur de la paroi périphérique 2' du carter 2, et que ledit carter 2 comporte des contre-couteaux 13', 13" montés, fixes ou réglables et avec espacement mutuel, sur le pourtour du carter 2 au niveau de ladite paroi périphérique 2' s'étendant radialement autour de l'organe rotatif de projection 3, lesdits couteaux 13 et contre-couteaux 13', 13" coopérant mutuellement lors de la rotation des pales radiales 6 pour découper et/ou hacher les produits à éjecter.

L'homme du métier comprend que, dans ce cadre de réalisation pratique, le dispositif de projection 1 selon l'invention présente une constitution de base et un mode de fonctionnement similaires à ceux du dispositif décrit dans le document FR 2 993 138 précité, et représenté sur la figure 5 de ce dernier.

Sur la figure 3, le repère C indique le cercle virtuel parcouru par les arêtes extérieures des couteaux 13.

De plus, on peut également prévoir que le conduit ou la goulotte 5 soit constitué(e) d'au moins deux portions consécutives 5' et 14 reliées entre elles de manière articulée, de manière à autoriser un réglage au moins limité de la direction d'éjection des produits à la sortie de ladite goulotte ou dudit conduit 5. Ces deux portions peuvent éventuellement présenter une paroi inférieure 11 commune et la portion 14 peut elle-même présenter plusieurs sections articulées.

Enfin, le carter 2 est aussi pourvu d'une ouverture d'alimentation 15 permettant l'amenée des produits à projeter vers l'organe rotatif de projection 3 à structure discoïdale, préférentiellement selon une direction sensiblement perpendiculaire au plan dudit organe 3, et donc sensiblement parallèlement à l'axe de rotation AR' dudit organe 3.

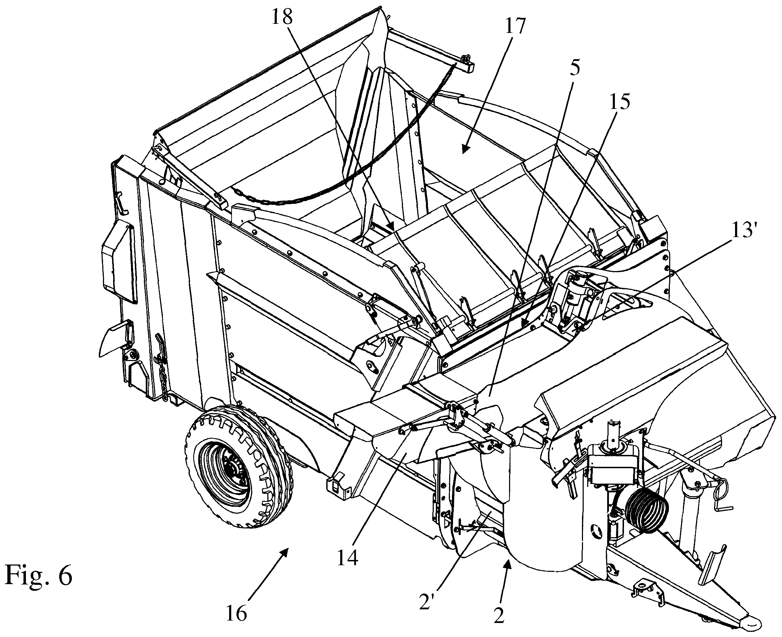

L'invention concerne également, comme le montre à titre d'exemple la figure 6, une machine agricole 16 fixe ou mobile, notamment machine autonome ou machine tractée ou portée par un véhicule tracteur, ladite machine 16 étant alimentée en fonctionnement par des produits en vrac ou fragmentaires devant être projetés à distance sous la forme d'un jet directionnel 7, éventuellement après hachage ou découpage préalable.

Conformément à l'invention, cette machine agricole 16 est caractérisée en ce qu'elle comprend un dispositif de projection 1 tel que décrit précédemment.

De plus, dispositif de projection 1 peut être alimenté en produits depuis un contenant 17, tel qu'un caisson ou une benne, intégré ou non à la structure de ladite machine 16, les produits subissant éventuellement une opération de désagrégation, de séparation et/ou de démêlage, par l'intermédiaire d'un moyen 18 adapté, avant leur introduction dans le carter 2 renfermant l'organe rotatif de projection 3.

En accord avec une application préférée de l'invention, et comme le montre la figure 6, la machine agricole 16 consiste en une machine de distribution portée ou tractée, dont les organes actifs 3, 9, 18 sont avantageusement entraînés par la prise de force du véhicule tracteur et qui est apte et destinée à projeter des produits d'alimentation ou de litière pour animaux, telle que par exemple une pailleuse hacheuse distributrice.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de projection de produits en vrac ou fragmentaires, en particulier produits pour l'alimentation animale ou la formation de litière pour animaux, comprenant un carter (2) dans lequel est monté un organe rotatif (3) de projection et comportant une ouverture latérale d'éjection (4) se prolongeant par un conduit ou une goulotte (5), ledit organe rotatif présentant des pales radiales (6) destinées à entraîner les produits pour les projeter à travers l'ouverture dans la goulotte, en formant un jet de matière essentiellement dirigé selon l'axe médian de la portion de goulotte adjacente à l'ouverture, et avec avantageusement génération simultanément d'un flux d'air de transport, l'ouverture d'éjection étant ménagée dans la paroi périphérique (2') du carter le long de la face interne de laquelle défilent les extrémités extérieures (6') des pales radiales et comportant un bord ou une arête (8) de délimitation disposé(e) du côté de l'ouverture vu en dernier par les extrémités périphériques extérieures des pales lors de leur rotation durant un fonctionnement opérationnel du dispositif, formant généralement le bord ou l'arête de délimitation inférieure de ladite ouverture,
dispositif de projection (1) **caractérisé en ce qu'**au moins un organe (9) actif et mobile, apte et destiné à diriger les produits qui entrent en contact avec lui à travers l'ouverture (4), dans la goulotte (5) et sensiblement dans le jet (7) de matière éjectée, est disposé dans la région dudit bord ou de ladite arête (8).

2. Dispositif de projection selon la revendication 1, **caractérisé en ce que** l'organe actif et mobile (9) consiste en un organe rotatif, préférentiellement de forme sensiblement cylindrique, avec un axe de rotation (AR) disposé transversalement par rapport à la direction du jet de matière (7) éjecté, préférentiellement parallèlement à l'axe de rotation (AR') de l'organe rotatif de projection (3), et pourvu, sur sa face extérieure destinée à entrer en contact avec les produits, de formations saillantes ou de projections (10), en particulier de type profilé, telles que par exemple des ailettes ou des pales, et s'étendant ou non parallèlement à l'axe de rotation (AR) dudit organe actif (9).

3. Dispositif de projection selon l'une quelconque des revendications 1 et 2, **caractérisé en ce que** l'organe actif et mobile (9) est positivement entraîné en rotation, préférentiellement avec une vitesse linéaire périphérique inférieure ou égale à la moitié de la vitesse linéaire périphérique de l'organe rotatif de projection (3), et **en ce qu'**il consiste en un rotor avec un corps (9') à paroi cylindrique pourvue d'ailettes ou de pales saillantes (10) sur sa face extérieure, arrangées parallèlement à son axe de rotation (AR).

4. Dispositif de projection selon l'une quelconque des revendications 1 à 3, **caractérisé en ce que** l'organe actif et mobile (9) s'étend sensiblement sur toute la largeur de l'ouverture latérale d'éjection (4) et partiellement dans le passage (5") défini par la portion de goulotte (5') adjacente à l'ouverture (4) précitée, avantageusement avec un degré de proéminence, par rapport à la paroi inférieure (11) de la portion de goulotte (5'), au plus égal à un tiers de la hauteur dudit passage (5"), préférentiellement avec une proéminence comprise entre un cinquième et un tiers de cette hauteur.

5. Dispositif de projection selon l'une quelconque des revendications 1 à 4, **caractérisé en ce que** l'organe actif et mobile (9) de forme cylindrique constitue lui-même le bord ou l'arête inférieure (8) de l'ouverture latérale d'éjection (4), ainsi qu'au moins partiellement ladite paroi inférieure (11) de la portion de goulotte (5') adjacente à ladite ouverture d'éjection latérale (4), l'encombrement périphérique externe dudit organe (9) étant avantageusement affleurante avec la face interne de la paroi périphérique (2') du carter (2) s'étendant radialement autour de l'organe rotatif de projection (3) et dans laquelle est ménagée l'ouverture latérale d'éjection (4).

6. Dispositif de projection selon l'une quelconque des revendications 2 à 5, **caractérisé en ce que** l'organe actif et mobile (9) est saillant dans le passage (5") défini par la portion de goulotte (5') adjacente à l'ouverture latérale d'éjection (4), préférentiellement par le bas, en étant monté réglable en hauteur par rapport à la paroi inférieure (11) correspondante de la goulotte (5), préférentiellement de section carrée ou rectangulaire, avantageusement par positionnement réglable avec ablocage libérable de son axe de rotation (AR).

7. Dispositif de projection selon l'une quelconque des revendications 1 à 6, **caractérisé en ce que** la paroi supérieure (11') de la portion de goulotte (5') adjacente à l'ouverture latérale d'éjection (4) s'étend, vue selon une direction parallèle à l'axe de rotation (AR') de l'organe rotatif d'éjection (3), continûment depuis la paroi périphérique (2') du carter (2) arrangé radialement autour dudit organe rotatif de projection (3), selon une direction sensiblement tangentielle au cercle périphérique extérieur balayé par les extrémités des pales radiales (6) au cours de leur rotation et **en ce que** ladite paroi périphérique (2') se termine par une tôle de recyclage (12) dont la portion d'extrémité libre (12') se prolonge jusqu'au bord inférieur (8) de l'ouverture latérale d'éjection (4) recevant ou formé par l'organe actif et mobile (9), en s'écartant dudit cercle périphérique extérieur balayé par lesdites extrémités (6') des pales radiales (6).

8. Dispositif de projection selon l'une quelconque des revendications 1 à 7, **caractérisé en ce que** les extrémités (6') des pales radiales (6) comportent des couteaux (13), montés à pivotement sur lesdites pales (6), avantageusement sur toute la largeur de la paroi périphérique (2') du carter (2), et **en ce que** ledit carter (2) comporte des contre-couteaux (13', 13") montés, fixes ou réglables et avec espacement mutuel, sur le pourtour du carter (2) au niveau de ladite paroi périphérique (2') s'étendant radialement autour de l'organe rotatif de projection (3), lesdits couteaux (13) et contre-couteaux (13', 13") coopérant mutuellement lors de la rotation des pales radiales (6) pour découper et/ou hacher les produits à éjecter.

9. Dispositif de projection selon l'une quelconque des revendications 1 à 8, **caractérisé en ce que** le conduit ou la goulotte (5) est constitué(e) d'au moins deux portions consécutives (5', 14) reliées entre elles de manière articulée, de manière à autoriser un réglage au moins limité de la direction d'éjection des produits à la sortie de ladite goulotte ou dudit conduit (5).

10. Dispositif de projection selon l'une quelconque des revendications 1 à 9, **caractérisé en ce que** le carter (2) est pourvu d'une ouverture d'alimentation (15) permettant l'amenée des produits à projeter vers l'organe rotatif de projection (3) à structure discoïdale, préférentiellement selon une direction sensiblement perpendiculaire au plan dudit organe (3), et donc sensiblement parallèlement à l'axe de rotation (AR') dudit organe (3).

11. Machine agricole fixe ou mobile, notamment machine autonome ou machine tractée ou portée par un véhicule tracteur, ladite machine étant alimentée en fonctionnement par des produits en vrac ou fragmentaires devant être projetés à distance sous la forme d'un jet directionnel, éventuellement après hachage ou découpage préalable, machine agricole (16) **caractérisée en ce qu'**elle comprend un dispositif de projection (1) selon l'une quelconque des revendications 1 à 10.

12. Machine agricole selon la revendication 11, **caractérisée en ce que** le dispositif de projection (1) est alimenté en produits depuis un contenant (17), tel qu'un caisson ou une benne, intégré ou non à la structure de ladite machine (16), les produits subissant éventuellement une opération de désagrégation, de séparation et/ou de démêlage, par l'intermédiaire d'un moyen (18) adapté, avant leur introduction dans le carter (2) renfermant l'organe rotatif de projection (3).

13. Machine agricole selon l'une quelconque des revendications 11 et 12, **caractérisée en ce qu'**elle consiste en une machine de distribution portée ou tractée, dont les organes actifs (3, 9, 18) sont avantageusement entraînés par la prise de force du véhicule tracteur et qui est apte et destinée à projeter des produits d'alimentation ou de litière pour animaux, telle que par exemple une pailleuse hacheuse distributrice.

## Patentansprüche

1. Vorrichtung zum Ausbringen von Schüttgut oder Bruchstückgut, insbesondere von Erzeugnissen zur Tierfütterung oder Bildung von Tierstreu, aufweisend ein Gehäuse (2), in welchem ein drehbares Ausbringorgan (3) gelagert ist und das eine seitliche Auswurföffnung (4) aufweist, die sich in einer Leitung bzw. einem Kanal (5) fortsetzt, wobei das drehbare Organ radial verlaufende Schaufeln (6) aufweist, die dazu bestimmt sind, die Erzeugnisse mitzureißen, um sie durch die Öffnung in den Kanal zu schleudern, indem ein Materialstrahl gebildet wird, der im Wesentlichen entlang der Mittelachse des an die Öffnung angrenzenden Kanalabschnitts gerichtet ist, und indem vorzugsweise gleichzeitig ein Förderluftstrom gebildet wird, wobei die Auswurföffnung in der Umfangswand (2') des Gehäuses ausgebildet ist, entlang welcher die äußeren Enden (6) der radial verlaufenden Schaufeln sich an deren Innenseite vorbeibewegen, und einen Begrenzungsrand bzw. eine Begrenzungskante (8) umfasst, der bzw. die auf der Seite der Öffnung angeordnet ist, welche als letztes durch die äußeren Umfangsenden der Schaufeln bei ihrer Drehung während eines Betriebs der Vorrichtung als letztes gelangen, und im Allgemeinen den unteren Begrenzungsrand bzw. die untere Begrenzungskante der Öffnung bildet,
wobei die Ausbringvorrichtung (1) **dadurch gekennzeichnet ist,**
**dass** zumindest ein bewegliches Wirkorgan (9), das dazu geeignet und bestimmt ist, die Erzeugnisse, die mit diesem durch die Öffnung (4) in Kontakt gelangen, in den Kanal (5) und im Wesentlichen in den ausgeworfenen Materialstrahl (7) zu leiten, in dem Bereich des Randes bzw. der Kante (8) angeordnet ist.

2. Ausbringvorrichtung nach Anspruch 1,
**dadurch gekennzeichnet,**
**dass** das bewegliche Wirkorgan (9) aus einem drehbaren Organ besteht, das vorzugsweise im Wesentlichen zylinderförmig ist und eine Drehachse (AR) aufweist, die quer zur Richtung des ausgeworfenen Materialstrahls (7) und vorzugsweise parallel zur Drehachse (AR') des drehbaren Ausbringorgans (3) angeordnet ist, und an seiner Außenseite, die mit den Erzeugnissen in Kontakt gelangen soll, mit vorspringenden Ausformungen bzw. Vorsprüngen (10) versehen ist, die insbesondere profiliert ausgebildet sind, wie etwa beispielsweise mit Flügeln bzw. Schaufeln, die gegebenenfalls parallel zur Drehachse (AR) des Wirkorgans (9) verlaufen.

3. Ausbringvorrichtung nach einem der Ansprüche 1 und 2,
**dadurch gekennzeichnet,**
**dass** das bewegliche Wirkorgan (9) formschlüssig drehend angetrieben wird, vorzugsweise mit einer linearen Umfangsgeschwindigkeit, die geringer oder gleich der halben linearen Umfangsgeschwindigkeit des drehbaren Ausbringorgans (3) ist, und dass es aus einem Rotor mit einem Körper (9') mit Zylinderwand besteht, die mit auf ihrer Außenseite vorspringenden Flügeln bzw. Schaufeln (10) versehen ist, die parallel zu seiner Drehachse (AR) angeordnet sind.

4. Ausbringvorrichtung nach einem der Ansprüche 1 bis 3,
**dadurch gekennzeichnet,**
**dass** das bewegliche Wirkorgan (9) sich im Wesentlichen über die gesamte Breite der seitlichen Auswurföffnung (4) und teilweise in den Durchgang (5") erstreckt, der durch den an die vorgenannte Öffnung (4) angrenzende Kanalabschnitt (5') definiert ist, vorzugsweise mit einem Vorsprungsmaß bezüglich der unteren Wand (11) des Kanalabschnitts (5'), das höchstens gleich einem Drittel der Höhe dieses Durchgangs (5") ist, vorzugsweise mit einem Vorsprungsmaß, das zwischen einem Fünftel und einem Drittel dieser Höhe liegt.

5. Ausbringvorrichtung nach einem der Ansprüche 1 bis 4,
**dadurch gekennzeichnet,**
**dass** das zylinderförmige, bewegliche Wirkorgan (9) selbst den unteren Rand bzw. die untere Kante (8) der seitlichen Auswurföffnung (4) sowie zumindest teilweise die an die seitliche Auswurföffnung (4) angrenzende untere Wand (11) des Kanalabschnitts (5') bildet, wobei der äußere Umfangsplatzbedarf des Organs (9) vorteilhaft bündig mit der Innenseite der Umfangswand (2') des Gehäuses (2) verläuft, die sich radial um das drehbare Ausbringorgan (3) erstreckt und in welcher die seitliche Auswurföffnung (4) ausgebildet ist.

6. Ausbringvorrichtung nach einem der Ansprüche 2 bis 5,
**dadurch gekennzeichnet,**
**dass** das bewegliche Wirkorgan (9) vorzugsweise von unten in den Durchgang (5") vorspringt, den der an die seitliche Auswurföffnung (4) angrenzende Kanalabschnitt (5') definiert, indem es bezüglich der entsprechenden unteren Wand des Kanals (5) höhenverstellbar gelagert ist und vorzugsweise einen quadratischen oder rechteckförmigen Querschnitt aufweist, vorteilhaft durch verstellbare Positionierung mit lösbarer Einspannung ihrer Drehachse (AR).

7. Ausbringvorrichtung nach einem der Ansprüche 1 bis 6,
**dadurch gekennzeichnet,**
**dass** die an die seitliche Auswurföffnung (4) angrenzende obere Wand (11') des Kanalabschnitts (5') sich in einer Richtung parallel zur Drehachse (AR') des drehbaren Auswurforgans (3) gesehen durchgehend von der Umfangswand (2') des um das drehbare Ausbringorgan (3) radial angeordneten Gehäuses (2) in einer Richtung im Wesentlichen tangential zum äußeren Umfangskreis erstreckt, der von den Enden der radial verlaufenden Schaufeln (6) im Laufe ihrer Drehung überstrichen wird, und dass die genannte Umfangswand (2') mit einem Rückführblech (12) endet, dessen freier Endabschnitt (12') sich bis zum unteren Rand (8) der seitlichen Auswurföffnung (4) fortsetzt, der durch das bewegliche Wirkorgan (9) aufgenommen oder gebildet wird, indem es sich von dem äußeren Umfangskreis weg erstreckt, das von den Enden (6') der radial verlaufenden Schaufeln (6) überstrichen wird.

8. Ausbringvorrichtung nach einem der Ansprüche 1 bis 7,
**dadurch gekennzeichnet,**
**dass** die Enden (6') der radial verlaufenden Schaufeln (6) Messer (13) aufweisen, die an den Schaufeln (6) schwenkbar gelagert sind, vorzugsweise über die gesamte Breite der Umfangswand (2') des Gehäuses (2), und dass das Gehäuse (2) Gegenmesser (13', 13") enthält, die am Umfang des Gehäuses (2) im Bereich der Umfangswand (2'), die sich radial um das drehbare Ausbringorgan (3) erstreckt, fest oder einstellbar und mit gegenseitigem Abstand gelagert sind, wobei die Messer (13) und die Gegenmesser (13', 13") bei der Drehung der radial verlaufenden Schaufeln (6) miteinander zusammenwirken, um die auszuwerfenden Erzeugnisse zu zerschneiden und/oder zu zerhäckseln.

9. Ausbringvorrichtung nach einem der Ansprüche 1 bis 8,
**dadurch gekennzeichnet,**
**dass** die Leitung bzw. der Kanal (5) aus zumindest zwei aufeinanderfolgenden Abschnitten (5', 14') besteht, die gelenkig miteinander verbunden sind, so dass sie eine zumindest begrenzende Einstellung der Auswurfrichtung der Erzeugnisse am Auslass des Kanals bzw. der Leitung (5) gestatten.

10. Ausbringvorrichtung nach einem der Ansprüche 1 bis 9,
**dadurch gekennzeichnet,**
**dass** das Gehäuse (2) mit einer Zuführöffnung (15) versehen ist, welche das Zuführen von auszuwerfenden Erzeugnissen zum drehbaren Ausbringorgan (3) mit scheibenförmiger Struktur gestatten, vorzugsweise in einer Richtung im Wesentlichen senkrecht zur Ebene des Organs (3) und somit im Wesentlichen parallel zur Drehachse (AR') des Organs (3).

11. Feste bzw. bewegliche landwirtschaftliche Maschine, insbesondere eigenständige Maschine oder von einem Zugfahrzeug gezogene bzw. getragene Maschine, wobei die Maschine im Betrieb mit Schüttgut bzw. Bruchstückgut gespeist wird, das in einer Entfernung in Form eines gerichteten Strahls auszubringen ist, gegebenenfalls nach vorherigem Zerhäckseln bzw. Zerschneiden,
welche landwirtschaftliche Maschine (16)
**dadurch gekennzeichnet ist,**
**dass** sie eine Ausbringvorrichtung (1) nach einem der Ansprüche 1 bis 10 aufweist.

12. Landwirtschaftliche Maschine nach Anspruch 11,
**dadurch gekennzeichnet,**
**dass** die Ausbringvorrichtung (1) ausgehend von einem Behältnis (17), wie etwa einem Kasten oder eine Wanne, mit Erzeugnisses gespeist wird, der bzw. die gegebenenfalls im Aufbau der Maschine (16) integriert ist, wobei die Erzeugnisse gegebenenfalls über ein geeignetes Mittel (18) einen Arbeitsgang der Zerlegung, Trennung und/oder Auflockerung ausgesetzt werden, bevor sie in das das drehbare Ausbringorgan (3) umschließende Gehäuse (2) eingeführt werden.

13. Landwirtschaftliche Maschine nach einem der Ansprüche 11 und 12,
**dadurch gekennzeichnet,**
**dass** sie aus einer getragenen bzw. gezogenen Verteilungsmaschine besteht, deren Wirkorgane (3, 9, 18) vorteilhaft durch die Zapfwelle des Zugfahrzeugs angetrieben werden, und die dazu geeignet und bestimmt ist, Ernährungs-oder Streuerzeugnisse für Tiere auszubringen, wie beispielsweise ein Strohhäckselverteiler.

## Claims

1. Device for spraying bulk or fragmentary products, in particular products for feeding animals or forming bedding for animals, comprising a housing (2) in which is mounted a rotary spraying member (3) and having a side ejection opening (4) extended by a pipe or a chute (5), said rotary member having radial blades (16) designed to entrain the products in order to project them through the opening in the chute, forming a jet of material essentially directed along the median axis of the portion of chute adjacent to the opening, while advantageously simultaneously generating a stream of transporting air, the ejection opening being formed in the peripheral wall (2') of the housing along the internal face of which the outer ends (6') of the radial blades pass, and having a delimiting rim or edge (8) disposed on the side of the opening last seen by the outer peripheral ends of the blades as they rotate during operational functioning of the device, generally forming the lower delimiting rim or edge of said opening,
the spraying device (1) being **characterised in that** at least one active and mobile member (9) having the capability and being designed to direct the products which come into contact with it through the opening (4), into the chute (5) and substantially into the jet (7) of material being ejected, is disposed in the region of said rim or said edge (8).

2. Spraying device according to claim 1, **characterised in that** the active and mobile member (9) consists of a rotary member, preferably of substantially cylindrical shape, with an axis of rotation (AR) disposed transversely in relation to the direction of the jet of material (7) being ejected, preferably parallel to the axis of rotation (AR') of the rotary spraying member (3), and provided on its outer face designed to come into contact with the products, with projecting formations or projections (10), in particular of profiled type, such as for example fins or blades, and which may or may not extend parallel to the axis of rotation (AR) of said active member (9).

3. Spraying device according to any one of claims 1 and 2, **characterised in that** the active and mobile member (9) is positively driven in rotation, preferably with a peripheral linear speed of less than or equal to half the peripheral linear speed of the rotary spraying member (3), and **in that** it consists of a rotor with a body (9') with a cylindrical wall provided with projecting fins or blades (10) on its outer face, arranged parallel to its axis of rotation (AR).

4. Spraying device according to any one of claims 1 to 3, **characterised in that** the active and mobile member (9) extends substantially over the entire width of the side ejection opening (4) and partially into the passage (5") defined by the portion of chute (5') adjacent to the opening (4) mentioned previously, advantageously with a degree of prominence, in relation to the lower wall (11) of the portion of chute (5'), at most equal to a third of the height of said passage (5"), preferably with a prominence of between a fifth and a third of this height.

5. Spraying device according to any one of claims 1 to 4, **characterised in that** the active and mobile member (9) of cylindrical shape itself constitutes the lower rim or edge (8) of the side ejection opening (4), and at least partially said lower wall (11) of the portion of chute (5') adjacent to said side ejection opening (4), the external peripheral bulk of said member (9) being advantageously flush with the internal face of the peripheral wall (2') of the housing (2) extending radially around the rotary spraying member (3) and in which is formed the side ejection opening (4).

6. Spraying device according to any one of claims 2 to 5, **characterised in that** the active and mobile member (9) projects into the passage (5") defined by the portion of chute (5') adjacent to the side ejection opening (4), preferably at the bottom, being mounted adjustable in height in relation to the corresponding lower wall (11) of the chute (5), preferably of square or rectangular section, advantageously through adjustable positioning with releasable locking of its axis of rotation (AR).

7. Spraying device according to any one of claims 1 to 6, **characterised in that** the upper wall (11') of the portion of chute (5') adjacent to the side ejection opening (4) extends, viewed in a direction parallel to the axis of rotation (AR') of the rotary spraying member (3), continuously from the peripheral wall (2') of the housing (2) arranged radially around said rotary spraying member (3), in a direction substantially tangential to the outer peripheral circle swept by the ends of the radial blades (6) in the course of their rotation, and **in that** said peripheral wall (2') ends with a recycling plate (12) the free end portion (12') of which is extended as far as the lower edge (8) of the side ejection opening (4) receiving or formed by the active and mobile member (9), moving away from said outer peripheral circle swept by said ends (6') of the radial blades (6).

8. Spraying device according to any one of claims 1 to 7, **characterised in that** the ends (6') of the radial blades (6) comprise cutters (13) mounted pivotally on said blades (6), advantageously over the entire width of the peripheral wall (2') of the housing (2), and **in that** said housing (2) comprises counter-cutters (13', 13") mounted so as to be fixed or adjustable and with mutual spacing, on the circumference of the housing (2) on said peripheral wall (2') extending radially around the rotary spraying member (3), said cutters (13) and counter-cutters (13', 13") cooperating with one another during the rotation of the radial blades (6) to cut and/or chop the products to be ejected.

9. Spraying device according to any one of claims 1 to 8, **characterised in that** the pipe or the chute (5) is formed of at least two consecutive portions (5', 14) connected to one another in articulated fashion so as to allow at least limited adjustment of the direction of ejection of the products at the outlet of said chute or said pipe (5).

10. Spraying device according to any one of claims 1 to 9, **characterised in that** the housing (2) is provided with a feeding opening (15) allowing the feeding of the products to be projected out to the rotary spraying member (3) with a discoidal structure, preferably in a direction substantially perpendicular to the plane of said member (3), and thus substantially parallel to the axis of rotation (AR') of said member (3).

11. Fixed or mobile agricultural machine, in particular an autonomous machine or a machine towed or carried by a tractor vehicle, said machine being fed while functioning with bulk or fragmentary products which are to be projected over a distance in the form of a directional jet, optionally after prior chopping or cutting, the agricultural machine (16) being **characterised in that** it comprises a spraying device (1) according to any one of claims 1 to 10.

12. Agricultural machine according to claim 11, **characterised in that** the spraying device (1) is fed with products from a container (17), such as a box or a bin, which may or may not be incorporated in the structure of said machine (16), the products optionally undergoing a disintegration, separation and/or shredding operation, through the intermediary of an appropriate means (18), before being introduced into the housing (2) enclosing the rotary spraying member (3).

13. Agricultural machine according to any one of claims 11 and 12, **characterised in that** it consists of a distributing machine which is carried or towed, the active members (3, 9, 18) of which are advantageously driven by the power take-off of the tractor vehicle and which has the capability and is designed to project products for feeding or bedding for animals, such as for example a distributing, chopping and straw-shredding machine.
